# EUROPEAN PATENT APPLICATION

(11) **EP 1 967 822 A1**
(43) Date of publication of application: **10.09.2008**
(21) Application number: 08151666.8
(22) Date of filing: 20.02.2008
(51) Int. Cl.: G01C 21/36, G10L 13/04

(54) **Navigation device**

(30) Priority: 05.03.2007 JP 2007054336
(71) Applicant: Aisin AW Co., Ltd., Fujii-cho Anjo-shi, Aichi 444-1192 (JP)
(72) Inventor: NAKAYAMA, Takaaki, Okazaki-shi Aichi 444-8564 (JP)
(74) Representative: Vossius & Partner

(57) **Abstract**

When a first guidance reissue request is placed following voice guidance, it is likely that a driver has failed to hear the voice guidance, and therefore guidance having an identical content (only the distance is modified, likewise hereafter) to the initial guidance is issued. From a second guidance reissue request, on the other hand, it is likely that the driver desires different information, and therefore the guidance is reissued after modifying the content of an additional guidance item. In this case, the content of the basic guidance item remains the same. The additional guidance item may be modified by modifying the structure of the item (first example) or adding items (second example).

## Description

The disclosure of Japanese Patent Application No. 2007-054336 filed on March 5, 2007 including the specification, drawings and abstract is incorporated herein by reference in its entirety.

The present invention relates to a navigation device, for example a navigation device that receives a guidance reissue request from a driver after issuing voice guidance.

Navigation devices that display the current position of a vehicle and a map of the periphery of the vehicle on a screen and perform a travel route search and guidance to a destination have become widespread.
The various types of guidance performed by such a navigation device include not only screen display but also voice guidance.
Navigation devices having a function whereby the voice guidance that was output most recently is output again in accordance with a button operation when the driver fails to hear or wishes to reconfirm the voice guidance also exist.

JP-A-2001-324990 proposes a technique for storing the content of voice guidance in memory and reissuing the voice guidance in accordance with the storage content of the memory when a request is placed by a user.

In certain cases, for example when the driver wishes to listen carefully to the guidance, when the driver wishes to obtain more detailed information, and when the driver has sufficient time to perform an operation and listen to the voice guidance, the driver may request the same reproduced sound many times.
However, in a known navigation device having a function for re-outputting voice guidance, only the distance from the guidance subject changes, regardless of the number of times the driver requests a guidance reissue, and the rest of the content of the guidance remains the same.

It is therefore an object of the present invention to provide a guidance reissue that conforms to a driver request.

According to the present invention, when a request is issued through a guidance reissue requesting unit, the guidance content is modified according to the number of requests, after which the guidance is reissued, and therefore a guidance reissue that conforms to a driver request can be provided.

A preferred embodiment of a navigation device according to the present invention will be described in detail below with reference to FIGS. 1 to 3.
FIG. 1 is a system diagram of a navigation device according to an embodiment;
FIG. 2 is a flowchart illustrating voice guidance processing according to a first example; and
FIG. 3 is a flowchart illustrating voice guidance processing according to a second example.

(1) Outline of embodiment
   In a navigation device according to this embodiment, a travel route to a destination is set, and voice guidance relating to the advancement direction and so on is provided in accordance with the travel route.
   The navigation device determines whether or not the current position of a vehicle corresponds to a guidance subject point on the set travel route, and when an affirmative determination is made, voice guidance (initial guidance) is issued.
   For example, when the guidance subject is a junction, initial guidance such as "Turn left in approximately 300m. The supermarket XX marks the spot" is issued at a predetermined distance ahead of the junction.

The content of the voice guidance includes a basic guidance item that constantly serves as the guidance subject, and an additional guidance item in which guidance subjects and non-guidance subjects are determined according to the number of guidance reissue requests.
The basic guidance items include "distance guidance" such as "in approximately 300m", "in approximately 700m" and "imminently", and "junction direction guidance" such as "straight ahead", "turn right" and "turn left".
The additional guidance items include "landmark guidance" such as "the supermarket XX marks the spot", "head toward guidance" such as "head toward XX", "intersection guidance" such as "at City Hall South (the name of an intersection)" and so on.

The basic guidance items are issued regardless of the number of guidance reissue requests, but distances such as 300m, 700m and "imminently" are modified according to the distance to the guidance subject at the time of the guidance reissue request.
The additional guidance items are modified according to the number of requests from the second reissue request.

In this embodiment, when a first guidance reissue request is placed, it is likely that the driver has failed to hear, and therefore guidance having an identical content to the initial guidance (only the distance is modified; likewise below) is provided.
From the second guidance reissue request, on the other hand, it is likely that the driver wishes to receive different information, and therefore guidance is provided after modifying the structure of the additional guidance item. In this case, the content of the basic guidance item remains the same.

Modification of the additional guidance item includes modification through alteration of the structure of the additional guidance item (first example) and modification through the addition of new items (second example).
In structural modification, when "landmark guidance" is provided in the initial guidance, the landmark is changed to "head toward guidance" in the second guidance reissue and "intersection guidance" in the third guidance reissue, for example.
In modification through addition, when "landmark guidance" is provided in the initial guidance, "head toward guidance" is added to the "landmark guidance" in the second guidance reissue, and "intersection guidance" is added to the "landmark guidance" and the "head toward guidance" in the third guidance reissue, for example. Note, however, that the order of the basic guidance item and additional guidance items in actual voice guidance differs according to the content of each item.

The content of the additional guidance items is stored for each guidance subject, and determinations are made in advance as to whether or not to issue the additional guidance items in the initial guidance, and if so, which additional guidance item is to be issued. The modification order of the additional guidance items is also determined in advance, but an order of precedence may be regularized in advance according to the type of guidance subject (intersection, junction, turn, head toward guidance, and so on).

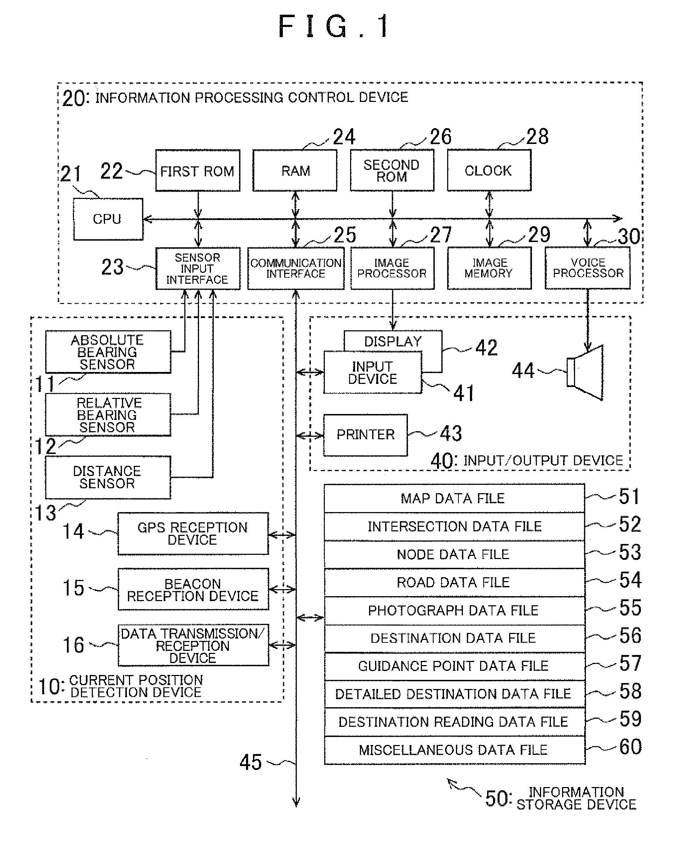

(2) Details of embodiment
   FIG. 1 is a system diagram of the navigation device according to this embodiment.
   The navigation device is installed in a vehicle and, as shown in FIG. 1, includes a current position detection device 10, an information processing control device 20, an input/output device 40 and an information storage device 50.

The current position detection device 10 is structured as follows. An absolute bearing sensor 11 is a geomagnetic sensor that detects the direction in which the vehicle is positioned by detecting the N direction on the basis of a magnet, for example. The absolute bearing sensor 11 may be a unit that detects the absolute direction.

A relative bearing sensor 12 detects whether or not the vehicle has turned at an intersection, for example, and may be an optical rotation sensor or a rotary resistance volume attached to a rotary portion of the steering wheel, or an angle sensor attached to a vehicle wheel portion.
A gyrosensor that detects angular variation using angular velocity may also be used. In other words, any unit that is capable of detecting angular variation relative to a reference angle (the absolute bearing) may be used.
A distance sensor 13 may be a unit that detects and counts vehicle wheel rotation or a unit that detects acceleration and subjects it to two-time integration, for example. In other words, any unit that is capable of measuring the movement distance of the vehicle may be used.

A GPS (Global Positioning System) reception device 14 receives signals from an artificial satellite, and is capable of obtaining various information such as the signal transmission time, positional information relating to the reception device, the movement speed of the reception device and the advancement direction of the reception device.
A beacon reception device 15 receives signals transmitted by a transmission device disposed in a specific geographical location. The beacon reception device 15 is capable of obtaining VICS (Vehicle Information and Communication System) information in particular, as well as information relating to vehicle travel such as congestion information, current position information and parking lot information.

A data transmission/reception device 16 communicates with the exterior of the vehicle using a telephone line or radio waves to perform information exchange.
For example, the data transmission/reception device 16 is capable of inputting and outputting travel-related information using a variety of methods such as automobile telephone, ATIS (Automatic Terminal Information Service), VICS, GPS correction and inter-vehicle communication.

The information processing control device 20 is a device for performing calculations and control on the basis of information input from the current position detection device 10 and the input/output device 40 and information stored in the information storage device 50, and performing control to ensure that the calculation results are output to an output unit such as a display 42, a printer 43 or a speaker 44.
The information processing control device 20 is structured as follows.
A central processing unit (CPU) 21 performs overall calculation and control of the entire navigation device, and also performs voice guidance processing and so on according to this embodiment.
A first ROM 22 stores navigation-related programs, in particular navigation programs relating to current position detection, route searches, display guidance, voice guidance and so on.
A sensor input interface 23 is a unit for receiving information from the current position detection device 10.

A RAM 24 is a storage unit for storing information input by a user such as destination information and transit point information, which are input through an input device to be described below, the results of calculations performed by the CPU 21 on the basis of the information input by the user, the results of a route search, and map information read from the infonnation storage device 50.
A communication interface 25 is a unit for inputting and outputting information from the current position detection device 10, in particular information obtained from the outside.

A second ROM 26 stores navigation-related programs, in particular navigation programs relating to travel route guidance and geographical location guidance.
An image processor 27 is a processing unit for processing vector information processed by the CPU into image information.
A clock 28 detects the current time.
An image memory 29 is a unit for storing image information processed by the image processor.
A voice processor 30 processes voice information read from the information storage device 50 and voice information for voice guidance reissuance, which is read from the RAM 24.

The input/output device 40 includes an input device 41 into which data such as a destination, transit points and search conditions are input by the user, the display 42 for displaying images, the printer 43 for printing information, and the speaker 44 for outputting a voice.
The input device 41 include a touch panel, a touch switch, a joystick, a key switch, or similar, for example. The input device of this embodiment is provided with a guidance reissue request key for requesting the reissuance of voice guidance. The guidance reissue request key may be linked to the display 42 by a touch panel or a touch switch, or may be formed as an independent button.
The display 42 displays a map of the periphery of the current location and a travel route to the destination.

The information storage device 50 is connected to the information processing control device 20 via a transmission line 45.
The information storage device 50 stores a map data file 51, an intersection data file 52, a node data file 53, a road data file 54, a photograph data file 55, a destination data file 56, a guidance point data file 57, a detailed destination data file 58, a destination reading data file 59, and a miscellaneous data file 60.
The information storage device 50 is typically structured by an optical storage medium such as a DVD-ROM or a CD-ROM, or a magnetic storage medium such as a hard disk, but may be structured by various other information storage media such as a magneto-optical disk or semiconductor memory.

The travel route guidance that is performed by the navigation device structured in this manner will now be described.
The navigation device detects the current position using the current position detection device 10, reads map information relating to the periphery of the current position from the map data file 51 in the information storage device 50, and displays the read map information on the display 42.
When a destination is input through the input device 41, the information processing control device 20 searches for (calculates) a plurality of travel route candidates from the current position to the destination and displays the travel route candidates on the map displayed on the display 42. Then, when the driver selects one of the travel routes, the selected travel route is stored in the RAM 24. Thus, a travel route is obtained (travel route acquisition unit).

Note that the information processing control device 20 may obtain the travel route by transmitting the current vehicle position (or an input point of departure) and the destination to an information processing center and receiving a travel route to the destination that has been searched in the information processing center. In this case, communication of the destination and travel route is performed by wireless communication via the communication interface 25.
Further, a travel route from the departure point to the destination may be searched using an information processing device such as a home personal computer or the like, whereupon the travel route is stored in a storage medium such as USB memory and obtained via a corresponding storage medium reading device. In this case, the storage medium reading device is connected to the information processing control device 20 via the transmission line 45.

Further, in relation to the travel route, a route may also be obtained by estimating a destination from the current time and current position and searching for a travel route to the estimated destination to be subjected to a route search. For example, the destination may be estimated by storing travel history data, extracting travel data obtained at the same time (including the day of the week) and relating to a route from an identical point to an identical point, such as a case in which the driver drives the vehicle to his/her company office (the geographical location of which has been registered) at around 7 o'clock on weekdays, and creating a database of departure points, destinations and departure times. Then, when the current time is 7 o'clock on a weekday and the current location is the home of the driver, for example, it is estimated that the destination is the company office, and a travel route from home to the company office is calculated and thereby obtained.

While the vehicle is moving, route guidance is performed by tracking the current position detected by the current position detection device 10.
In route guidance, the vehicle position on the map is specified by performing map matching between road data corresponding to the searched travel route and the current position detected by the current position detection device 10. A map of the periphery of the current vehicle position is then displayed on the display 42, and the searched travel route and current position are displayed on the map.
Further, a determination is made as to whether or not guidance is required from the relationship between the position of a guidance subject on the searched travel route and the current position. In other words, determinations such as whether or not travel route guidance at a predetermined turning point or the like and directional guidance are required are made when the vehicle has been traveling in a straight line for a predetermined distance or more, and when it is determined that guidance is required, guidance is issued as display on the display 42 and voice guidance.

Voice guidance (voice guidance processing) includes initial guidance, which is performed automatically by the navigation device in relation to a guidance subject, and guidance reissuance, which is based on a guidance reissue request from a passenger.

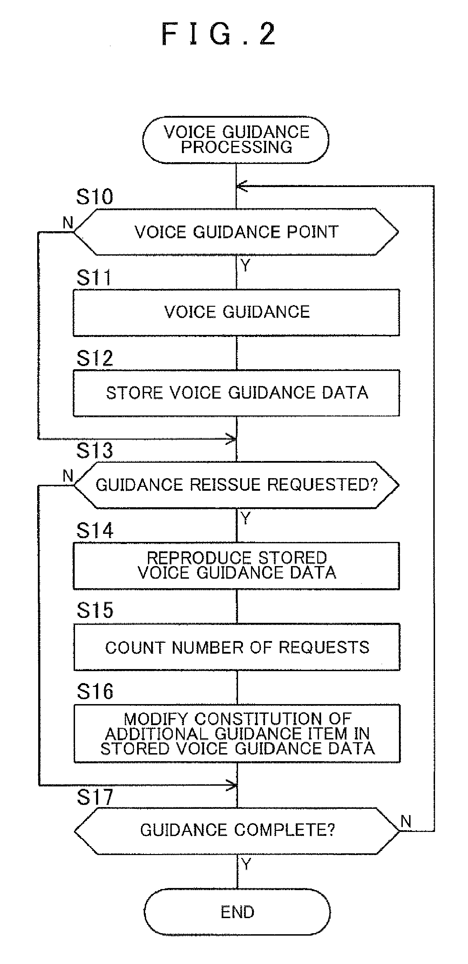

FIG. 2 is a flowchart illustrating the content of voice guidance processing (a first example).
As shown in FIG. 2, the information processing control device 20 monitors whether or not the vehicle has reached a voice guidance point relating to a guidance subject that exists ahead of the vehicle on the set travel route (step 10).
When the vehicle has not reached the voice guidance point, the process advances to step 13 in order to monitor guidance reissue requests relating to guidance subjects for which initial guidance has already been issued.

On the other hand, when the vehicle reaches the voice guidance point (step 10; Y), the information processing control device 20 issues voice guidance relating to the guidance subject (step 11), and stores the voice guidance data used in the initial guidance in a predetermined area of the RAM 24 in preparation for a voice guidance reissue request from the passenger (step 12).
Next, the information processing control device 20 monitors whether or not a voice guidance reissue request has been placed by the passenger using the input device 41 (step 13). If not (step 13; N), the routine advances to step 17.
In this case, when guidance is not complete in step 17, the routine returns to step 10. However, the voice guidance processing of steps 11 and 12 is not performed until the vehicle reaches the next voice guidance point, and instead the routine advances to step 13 from step 10. Thus, guidance reissue requests are monitored constantly until the vehicle reaches the next voice guidance point.

When a guidance reissue request has been placed by the passenger (step 13; Y), the information processing control device 20 calculates the distance from the guidance subject to the current vehicle position and, after modifying the distance part of the guidance in accordance with the calculated distance, reproduces the voice guidance data stored in the RAM 24 (step 14).
The initial guidance data are stored in the RAM 24, and therefore, when the guidance reissue request is placed for the first time, the content of the first guidance reissue is identical to the content of the initial voice guidance.

The information processing control device 20 counts the number of guidance reissue requests (step 15), and in preparation for the next (from second) guidance reissue request, modifies the structure of the additional guidance item of the voice guidance data stored in the RAM 24 in accordance with the counted number of requests (step 16). Note that counting of the number of guidance reissue requests in step 15 may be performed before step 14 or after step 16, as long as the count corresponds to the modification content of step 16.
In step 16, the information processing control device 20 modifies the structure of the additional guidance item in accordance with the number of guidance reissue requests (the strength of the request) in an order such as that shown in the following example.
It is assumed that the initial guidance is structured by the basic guidance items "distance guidance" and "junction direction guidance" and the additional guidance item "intersection guidance" such that, for example, the guidance "Turn left at City Hall South in approximately 700m" is issued.

(a) First guidance reissue request: "junction direction guidance" + "intersection guidance" + "distance guidance", i.e. "Turn left at City Hall South in approximately 500m".
(b) Second guidance reissue request: "junction direction guidance" + "distance guidance" + "landmark guidance", i.e. "Turn left in approximately 300m. The supermarket XX marks the spot".
(c) Third guidance reissue request: "junction direction guidance" + "distance guidance" + "head toward guidance", i.e. "Turn left in approximately 300m. Head toward Nagoya".
   In this example of guidance reissuance, the additional guidance item is underlined.

In the example described above, only the distance of the basic guidance items is modified from 700m to 500m in the content of the first guidance reissue, assuming that the passenger wishes to reconfirm the content of the initial guidance. The rest of the content of the guidance reissue is identical to the content of the initial guidance stored in the RAM 24 in step 12.
From the second guidance reissue, the structure of the additional guidance item is modified sequentially in addition to the distance of the basic guidance items, assuming that the passenger desires "guidance" rather than "reconfirmation". In the above example, the additional guidance item is modified from "intersection guidance" (at City Hall South) in the initial guidance and the first reissue to "landmark guidance" (the supermarket XX marks the spot) and then to "head toward guidance" (head toward Nagoya).

In this embodiment, the order of the additional guidance items is determined in advance for each guidance subject, and therefore modification is performed in this order. Note that when the final additional guidance item has been issued, the next guidance reissue returns to the first additional guidance item.

However, a rule may be determined in relation to the guidance precedence order of the additional guidance items such that modification is performed in accordance with this rule. For example, an order of "intersection guidance", "landmark guidance" and "head toward guidance" may be regularized as the order of precedence of the additional guidance items such that guidance is issued in order from the item existing in relation to the guidance subject that has the highest order of precedence. In so doing, the need to determine individual orders for each guidance subject is eliminated.
Further, in addition to this order of precedence, a special sequence for modifying the order of precedence may be determined for each guidance subject. More specifically, in the rule described above, the additional guidance item "landmark guidance" has a lower order of precedence than "intersection", but when a building or the like that is easier for the driver to recognize as a guidance subject than the actual road sign of the intersection exists, the "landmark guidance" relating to the building or the like may be set at a special high order of precedence. Guidance relating to individual guidance subjects that have been set with a special order is issued preferentially over the regularized order of precedence.

Note that in the above example, a case in which a single additional guidance item is provided in the initial guidance was described, but two or more additional guidance items may be provided.
For example, when a, b, c, d, e... are set as the additional guidance items, the structure of the additional guidance items is modified sequentially such that a and b are issued in the initial guidance, c and d are issued in the second guidance reissue, and e and f are issued in the third guidance reissue.
Partial modification may also be performed such that a and b are issued in the initial guidance, b and c are issued in the second guidance reissue, and c and d are issued in the third guidance reissue.

Returning to FIG. 2, after modifying the structure of the voice guidance data stored in the RAM 24, the information processing control device 20 determines whether or not guidance is complete on the basis of whether or not a guidance stopping operation has been performed by the navigation device and whether or not the ignition has been switched off. When guidance is complete (step 17; Y), the processing is terminated.
When guidance is not complete (step 17; N), on the other hand, the information processing control device 20 returns to step 10 in preparation for the next guidance reissue request (step 10; N → step 13) and in preparation for initial guidance relating to the next guidance subject (step 10; Y), and continues voice guidance processing.

A second example of voice guidance processing will now be described.
In the first example described with reference to the flowchart in FIG. 2, the structure of the additional guidance item is modified according to the number of guidance reissue requests, but in the second example, the number of issued additional guidance items is modified according to the number of guidance reissue requests.

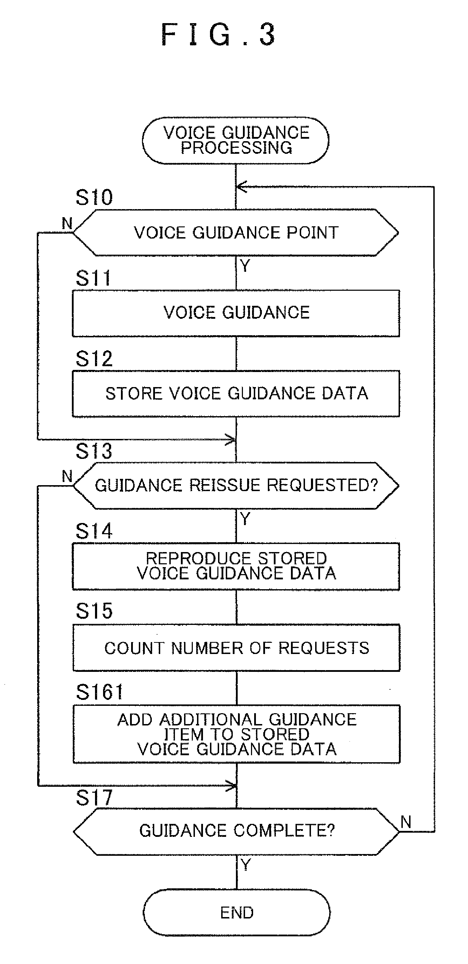

FIG. 3 is a flowchart illustrating the content of voice guidance processing according to the second example.
In the flowchart shown in FIG. 3, the processing of step 161 differs from the processing of step 16 of the first example, shown in FIG. 2. Since all other steps are identical, the same step numbers have been allocated thereto and description thereof has been omitted.

In step 161 of the second example, the information processing control device 20 adds additional guidance items sequentially in accordance with the number of guidance reissue requests (the strength of the request).
Similarly to the first example, it is assumed that the initial guidance is structured by the basic guidance items "distance guidance" and "junction direction guidance" and the additional guidance item "intersection guidance" such that, for example, the guidance "Turn left at City Hall South in approximately 700m" is issued.
In the following example, the added additional guidance items are underlined.

(a) First guidance reissue request: "junction direction guidance" + "intersection guidance" + "distance guidance", i.e. "Turn left at City Hall South in approximately 500m".
(b) Second guidance reissue request: "junction direction guidance" + "intersection guidance" + "distance guidance" + "landmark guidance", i.e. "Turn left at City Hall South in approximately 300m. The supermarket XX marks the spot".
(c) Third guidance reissue request: "junction direction guidance" + "intersection guidance" + "distance guidance" + "head toward guidance" + "landmark guidance", i.e. "Turn left at City Hall South in approximately 300m. Head toward Nagoya. The supermarket XX marks the spot".

Similarly to the first example, in the second example, only the distance of the basic guidance items is modified from 700m to 500m in the content of the first guidance reissue, assuming that the passenger wishes to reconfirm the content of the initial guidance. The rest of the content of the guidance reissue is identical to the content of the initial guidance stored in the RAM 24 in step 12.
From the second guidance reissue, the distance of the basic guidance items is modified and additional guidance items are added sequentially in accordance with the number of guidance reissue requests, assuming that the passenger desires "guidance" rather than "reconfirmation". In the above example, additional guidance items are added to "intersection guidance" in the initial guidance and the first reissue in order of "landmark guidance", "head toward guidance", ....

As described above, according to the navigation device of this embodiment, when a guidance reissue request is placed in relation to voice guidance regarding a guidance subject; the guidance content is modified (the structure of the additional item is modified or additional items are added) in accordance with the number of guidance reissue requests, and therefore, rather than listening to the same guidance repeatedly, the passenger can listen to various types of guidance information (additional guidance items) in accordance with the number of guidance reissue requests (the strength of the request). In other words, guidance reissuance that conforms to a driver request can be performed.
Further, the initial guidance is repeated in the first guidance reissue, and therefore a passenger who fails to hear the basic items can reconfirm the content thereof.
Note that the user may modify the number of times the initial guidance is repeated.

An embodiment of navigation according to the present invention was described above, but the present invention is not limited to the embodiment and examples described above, and may be subjected to various modifications within the scope of the claims.
For example, in the embodiment described above, a case in which the structure of the additional guidance item is modified according to the number of guidance reissue requests (first example) and a case in which additional guidance items are added (second example) were described as the manner in which the additional guidance items are modified, but the additional guidance items may be modified in both ways, i.e. modifying the structure of the additional guidance item and adding additional guidance items in accordance with the number of guidance reissue requests.
For example, an additional guidance item may be added in relation to the second guidance reissue request, and the additional guidance items may be modified in relation to the third guidance reissue request. In this case, the third modification may be applied to all of the additional items, including the item added in relation to the second request, or a part of the additional items.
Note that addition and structural modification may be performed in any order.

Further, in the embodiment described above, the guidance content is modified according to the number of guidance reissue requests, but a determination as to whether to repeat the previous guidance content or modify the content (by modifying the structure of the additional item and/or adding additional items) may be made in accordance with the time interval from the initial guidance to the guidance reissue request or the time interval from a guidance reissue based on the previous guidance reissue request to the next reissue request.
More specifically, when the time interval to the reissue request is equal to or smaller than a predetermined threshold, the previous guidance is repeated assuming that the driver wishes to listen to the previous guidance content again, and when the time interval is greater than the threshold, the guidance content is modified and reissued.

## Claims

1. A navigation device comprising:
a travel route acquisition unit for obtaining a travel route;
a voice guidance unit for providing voice guidance relating to a guidance subject on the obtained travel route;
a guidance reissue requesting unit for requesting a guidance reissue; and
a counting unit for counting a number of requests placed by the guidance reissue requesting unit in relation to an identical guidance subject,
wherein, when a request is placed by the guidance reissue requesting unit, the voice guidance unit modifies the guidance content in accordance with the number of requests, and then reissues the guidance.

2. The navigation device according to claim 1, wherein the voice guidance unit reissues guidance having the same guidance content as an initial guidance in relation to a first guidance reissue request, and from a second guidance reissue request, reissues the guidance after modifying the guidance content.

3. The navigation device according to claim 1 or 2, wherein the guidance relating to the guidance subject is structured by a basic guidance item and an additional guidance item, and
the voice guidance unit modifies the additional guidance item in accordance with the number of requests and then reissues the guidance.

4. The navigation device according to claim 1, 2, or 3, wherein the guidance relating to the guidance subject is structured by a basic guidance item and an additional guidance item, and
the voice guidance unit adds an additional guidance item in accordance with the number of requests and then reissues the guidance.

5. The navigation device according to claim 3 or 4, wherein the basic guidance item is structured by a distance and a junction direction, and
the voice guidance unit modifies the distance of the basic guidance item according to a distance from the guidance subject to a current position in both the initial guidance and the guidance reissue, and then issues the guidance.
